# FASCICULE DE BREVET EUROPEEN

(11) **EP 3 213 146 B1**
(45) Date de publication et mention de la délivrance du brevet: **15.05.2019**
(21) Numéro de dépôt: 15807686.9
(22) Date de dépôt: 22.10.2015
(51) Int. Cl.: G02F 1/1343, G02F 1/137

(54) **CELLULE REFLECHISSANTE A REFLECTIVITE MODULABLE**
REFLEKTIERENDE ZELLE MIT MODULARER REFLEKTIVITÄT
REFLECTIVE CELL WITH MODULAR REFLECTIVITY

(30) Priorité: 31.10.2014 FR 1402485
(43) Date de publication de la demande: 06.09.2017
(73) Titulaire: NEXTER Systems, 42328 Roanne Cedex (FR); Institut Mines Telecom - IMT Atlantique - Bretagne - Pays de la Loire, 29238 Brest Cedex 3 (FR)
(72) Inventeur: DUPONT, Laurent, 18023 Bourges (FR); MANNA, Suman, 18023 Bourges (FR)
(74) Mandataire: Cabinet Chaillot
(86) Numéro de dépôt international: PCT/FR2015/052843
(87) Numéro de publication internationale: WO 2016/066931

(56) Documents cités:
- US-A1- 2011 019 111
- NAUMOV A F ET AL: "LIQUID-CRYSTAL ADAPTIVE LENSES WITH MODAL CONTROL", OPTICS LETTERS, OPTICAL SOCIETY OF AMERICA, vol. 23, no. 13, 1 juillet 1998 (1998-07-01), pages 992-994, XP000772418, ISSN: 0146-9592

## Description

Le domaine technique de l'invention est celui des cellules réfléchissantes à base de cristaux liquides bistables, par exemple les cristaux liquides cholestériques.

Ces cellules comprennent généralement deux substrats recouverts chacun d'une électrode et disposés en regard l'un de l'autre. Les substrats délimitent entre eux un volume qui les sépare et qui est rempli par le cristal liquide bistable.

De telles cellules sont connues par exemple par le brevet WO2012/051127. Les cristaux liquides cholestériques ont la particularité de réfléchir la lumière incidente sur une partie du spectre visible qui est déterminée par le type de matériau dopant chiral associé au cristal liquide. L'autre partie du spectre est transmise. Lorsque ces cristaux sont soumis à un champ électrique d'un certain niveau (ou champ seuil), ils changent d'état et deviennent alors totalement transparents.

Du fait de leur transparence, les cellules à cristaux liquides cholestériques peuvent ainsi être empilées les unes sur les autres pour constituer des cellules polychromes permettant de réfléchir une couleur qui est une combinaison d'au moins deux couleurs élémentaires.

Les brevets US2006/0066803 et US7630029 décrivent ainsi des empilements de cellules élémentaires permettant de réaliser des afficheurs polychromes.

Un problème rencontré avec les cellules connues est celui de la modulation de leur réflectivité.

Il est en effet nécessaire de doser la réflectivité d'une cellule pour doser le niveau d'une couleur élémentaire donnée. On parle aussi couramment de « niveau de gris » d'une cellule et cela indépendamment de la couleur de la cellule considérée.

Une solution classique consiste à moduler la valeur du champ électrique appliqué aux électrodes.

En effet, lorsqu'un cristal liquide cholestérique se trouve dans son état planaire (celui où la réflexion est maximale), et que l'on augmente progressivement la valeur du champ électrique, l'état planaire du cristal cholestérique voit sa structure hélicoïdale détruite et il passe par une structure dite conique focale qui est transparente et stable.

A partir de cet état conique focale et en augmentant encore l'intensité du champ électrique, lorsque le champ dépasse un champ seuil, le cristal liquide s'aligne avec le champ et il passe dans un état homéotrope qui est transparent et instable.

Dans ce dernier état, à la coupure du champ électrique le cristal cholestérique repasse à son état planaire (forte réflexion).

Lorsqu'on est dans l'état conique focale, dès la coupure de champ, cet état perdure. Pour ramener le cristal à son état planaire il faut donc passer par l'état homéotrope, c'est à dire augmenter le champ électrique au-delà du champ seuil.

Il a été observé que l'état conique focale présente un taux de réflectivité qui décroit lorsque la tension qui est appliquée aux électrodes augmente (donc que le champ électrique augmente). Il est donc possible de doser le niveau de réflectivité en ajustant la valeur du champ électrique, tout en restant dans tous les cas avec un champ inférieur à la valeur de champ seuil qui fait basculer tout le matériau dans son état homéotrope. Ce procédé est décrit par le brevet EP582656.

Un inconvénient de ce procédé connu est que le niveau de gris obtenu reste difficile à maîtriser. La quantité de matériau ayant changé d'état pour la tension appliqué dépend en effet non seulement de la valeur de la tension mais aussi d'autres paramètres structurels tels que l'état de surface ou les défauts structurels du cristal liquide.

Les résultats en niveau de gris obtenus sont peu homogènes, aussi bien au niveau d'une cellule que pour plusieurs cellules associées et soumises au même champ.

Il a également été proposé de réaliser un multiplexage temporel, c'est à dire de jouer sur la fréquence du signal de commande de la cellule pour modifier, pour une cellule donnée, le rapport entre le temps passé dans l'état réfléchissant et le temps passé dans l'état transparent. La persistance rétinienne permet alors de percevoir le niveau de gris souhaité, qui n'est plus un état stable mais un état dynamique lié à la fréquence du signal de commande.

Outre la complexification de la commande électrique et le besoin d'alimenter en permanence en énergie les cellules, ce procédé présente aussi l'inconvénient de nécessiter un matériau cristal liquide dont le temps de commutation entre les états est plus court que la période du signal de commande. Or les matériaux connus présentent un temps de commutation trop longs (de l'ordre de quelques dizaines de millisecondes - à comparer avec les trames vidéo qui ont une durée de 40 à 60 millisecondes), ces temps de commutation sont par ailleurs variables avec la température.

On connait aussi par le brevet US2011/019111 un dispositif d'affichage à base de cristaux liquides cholestériques, dispositif permettant de contrôler le niveau de gris de la cellule considérée. Ce dispositif comprend des cellules comprenant en particulier des électrodes transparentes, une couche de cristal liquide cholestérique et une couche intermédiaire. La couche intermédiaire a une constante diélectrique qui est différente (inférieure ou supérieure) à celle du cristal liquide. La couche intermédiaire permet de créer des zones au sein du cristal liquide dans lesquelles le champ électrique est plus fort pour une tension donnée. Ce niveau de champ différent est lié, à la fois à la nature de la couche dont la constante diélectrique est différente de celle du cristal liquide, et à l'épaisseur de la couche qui intervient elle aussi sur le niveau du champ obtenu pour une tension entre électrodes donnée.

Une telle solution est de mise en oeuvre complexe car elle implique la réalisation de façon reproductible de motifs ayant une épaisseur donnée et entourés par le cristal liquide.

Par ailleurs le pilotage en tension qui est réalisé permet d'obtenir un nombre de niveau de gris prédéfini qui dépend du nombre de couches intermédiaires différentes qui est mis en oeuvre. En particulier une couche intermédiaire permet de n'obtenir qu'un seul niveau de gris intermédiaire et pour avoir d'avantage de niveaux de gris, il faut donc multiplier les couches intermédiaires de natures différentes ce qui complexifie encore la réalisation de la cellule.

C'est le but de l'invention que de proposer une cellule à cristal liquide bistable pour laquelle il est facile de maitriser le « niveau de gris » obtenu, c'est à dire la réflectivité.

La cellule selon l'invention permet d'obtenir de façon simple un niveau de gris qui est variable de façon continue.

La cellule selon l'invention peut par ailleurs conserver un niveau de gris souhaité sans alimentation électrique permanente. Elle consomme donc moins d'énergie et son alimentation électrique est simplifiée.

L'invention a également pour objet un procédé de modulation de la réflectivité d'une telle cellule réfléchissante.

La cellule et le procédé selon l'invention rendent ainsi possible la réalisation de pixels élémentaires polychromes pour un moyen d'affichage. Chaque couleur élémentaire du pixel pouvant être commandée de façon précise du point de vue de sa réflectivité.

Ainsi l'invention a pour objet une cellule réfléchissante comprenant au moins deux substrats recouverts chacun d'une électrode et disposés en regard l'un de l'autre, les substrats délimitant entre eux un volume qui les sépare et qui est rempli par un matériau de type cristal liquide bistable avec champ seuil, par exemple un cristal liquide cholestérique, les deux électrodes étant destinées à être reliées à une source de tension, cellule caractérisée en ce qu'au moins une des électrodes est formée par l'association d'un motif ne couvrant pas totalement la surface du substrat considéré et d'une couche conductrice couvrant la surface du substrat considéré, la conductivité du matériau de la couche étant inférieure à celle du matériau du motif.

Avantageusement, le motif aura une surface comprise entre 10% et 60% de la surface du substrat considéré.

La couche conductrice pourra être formée d'un dépôt de PEDOT-PSS.

Le motif conducteur pourra être formé par un dépôt d'ITO ou de métal.

Selon différents modes de réalisation, le motif pourra être formé par un ensemble de bandes conductrices parallèles, ou par au moins un quadrilatère, ou par une grille.

Selon un autre mode de réalisation, chaque électrode pourra être formée par l'association d'un motif ne couvrant pas totalement la surface du substrat considéré et d'une couche conductrice couvrant la surface du substrat considéré.

L'invention a également pour objet un procédé de modulation de la réflectivité d'une cellule réfléchissante selon l'invention, procédé caractérisé en ce qu'on applique entre les électrodes de la cellule une tension électrique alternative créant un champ électrique également alternatif entre les électrodes, l'amplitude maximale de ce champ électrique étant fixée et ayant un niveau légèrement supérieur au champ seuil du cristal liquide bistable, procédé dans lequel on module la réflectivité en variant la fréquence dudit champ électrique de façon à diminuer la valeur du champ électrique en dessous du champ seuil au niveau des zones du cristal liquide non couvertes par le motif.

Selon un autre mode de réalisation du procédé selon l'invention, on pourra appliquer entre les électrodes de la cellule une tension électrique alternative créant un champ électrique également alternatif entre les électrodes, la fréquence de la tension étant fixée à une valeur permettant de diminuer la valeur du champ électrique en dessous du champ seuil au niveau des zones du cristal liquide non couvertes par le motif lorsque l'amplitude maximale du champ électrique a un niveau initial légèrement supérieur au champ seuil du cristal liquide bistable, procédé dans lequel on module la réflectivité en variant l'amplitude maximale du champ électrique qui est supérieure au niveau initial de façon à augmenter également le champ électrique au niveau des zones du cristal liquide non couvertes par le motif et rapprocher ainsi dans lesdites zones ce champ électrique de la valeur du champ seuil.

L'invention sera mieux comprise à la lecture de la description qui va suivre de modes particuliers de réalisation, description faite en référence aux dessins annexés et dans lesquels :
- La figure 1 est une vue schématique en coupe transversale d'une cellule selon un mode de réalisation de l'invention ;
- La figure 2 est une vue de face d'un mode de réalisation d'une électrode de la cellule selon l'invention ;
- Les figure 3a et 3b sont des vues de face d'autres modes de réalisation d'une électrode de la cellule selon l'invention ;
- La figure 4 est un schéma montrant la variation spatiale du champ électrique dans une cellule selon l'invention ;
- La figure 5 une vue schématique en coupe transversale d'une cellule selon un autre mode de réalisation de l'invention ;
- La figure 6 est un schéma électrique correspondant à la cellule selon l'invention ;
- Les figures 7a, 7b, 7c, 7d et 7e sont des photographies permettant de visualiser les niveaux de gris obtenus pour différents niveaux de fréquence de signal.

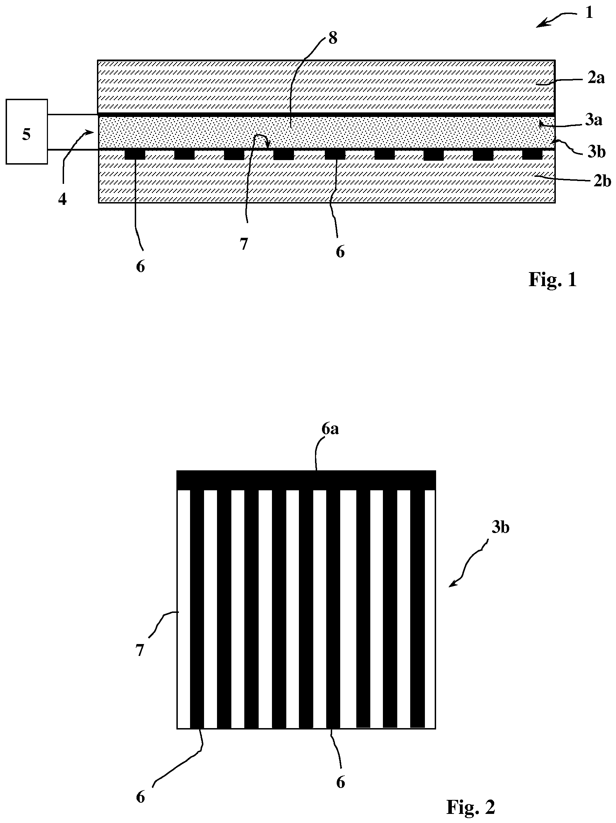

En se reportant à la figure 1, une cellule réfléchissante 1 selon un mode de réalisation de l'invention, comprend deux substrats 2a et 2b qui portent chacun une électrode 3a et 3b et qui sont disposés en regard l'un de l'autre. Les substrats 2a et 2b pourront être constitués par des lames de verre.

Les substrats 2a et 2b délimitent entre eux un volume 4 qui les sépare et qui est rempli par un matériau de type cristal liquide 8 bistable avec champ seuil, par exemple un cristal liquide cholestérique. Le cristal liquide 8 est donc interposé entre les deux substrats 2a et 2b.

Les deux électrodes 3a et 3b sont reliées à une source de tension 5, telle un générateur électrique, qui applique une tension U entre les électrodes 3a et 3b, ce qui engendre un champ électrique E entre les deux substrats 2a et 2b, donc entre les deux surfaces délimitant le cristal liquide 8.

Le cristal liquide cholestérique 8 est de façon classique un matériau comportant une structure macroscopique hélicoïdale de période P en l'absence de champ électrique appliqué (on parle d'état planaire du cristal). Ce matériau comporte une phase nématique associée à un dopant chiral qui permet d'ajuster le pas P de l'hélice. La longueur d'onde qui est réfléchie par le cristal liquide 8 dépend du pas P, donc du dopant chiral utilisé.

Le cristal liquide cholestérique adopte dans son état de repos son état planaire dans lequel il est réfléchissant de la lumière ayant la longueur d'onde associée à son pas P (λ = n.P, expression dans laquelle λ est la longueur d'onde réfléchie, n est l'indice moyen du matériau et P est le pas de l'hélice).

Comme cela a été décrit précédemment, lorsque la valeur du champ électrique E augmente, le cristal liquide passe de son état planaire à un état conique focale dans lequel les structures hélicoïdales sont partiellement basculées (ce qui conduit à une réflectivité plus réduite) puis à un état homéotrope dans lequel le cristal liquide s'aligne avec le champ électrique E et le matériau est alors transparent.

Les états planaires et conique focal sont des états stables dans lesquels le matériau reste en l'absence de champ. L'état homéotrope (transparent) est un état instable qui nécessite la présence du champ électrique.

Lorsque le champ électrique est coupé, le matériau passe de l'état homéotrope à l'état planaire (coefficient de réflexion maximal).

On notera E_{TH} la valeur du champ limite permettant le passage de l'état conique focale à l'état homéotrope.

De nombreux documents décrivent les structures et compositions des cristaux liquides cholestériques et il n'est donc pas nécessaire de donner ici plus de détails.

On pourra par exemple se reporter au texte du brevet WO2012051127 qui décrit plusieurs cristaux liquides cholestériques et les dopants chirals associés pour différentes longueurs d'ondes visibles.

Selon l'invention, la cellule 1 a une des électrodes, ici l'électrode 3b, qui est formée par l'association d'un motif 6 qui ne couvre pas totalement la surface du substrat 2b considéré et d'une couche conductrice 7 qui couvre la surface du substrat 2b considéré ainsi que le motif 6.

Les électrodes 3a et 3b sont bien entendu réalisées en des matériaux transparents. L'électrode 3a et le motif 6 de l'électrode 3b sont constitués par des dépôts associant oxyde d'indium (In₂O₃) et oxyde d'étain (SnO₂). Un tel matériau est couramment désigné sous l'acronyme anglo-saxon ITO (Indium Tin Oxyde).

Le matériau de la couche conductrice 7 sera le PDOT-PSS. Le PDOT-PSS désigne un mélange de deux polymères, le poly(3,4-éthylènedioxythiophène) (ou PEDOT) et le polystyrène sulfonate de sodium (ou PSS).

Ainsi la conductivité du matériau de la couche conductrice 7 est inférieure à celle du matériau du motif 6. La conductivité (notée le plus souvent σ) est exprimée en S.cm⁻¹ ou Siemens par centimètres et elle est l'inverse de la résistivité (notée le plus souvent ρ) et exprimée en Ω.cm ou Ohm x centimètres) ; σ = 1/ρ.

Pour des matériaux en couche mince on exprime généralement les caractéristiques de résistance électrique du matériau sous la forme de « résistance carrée » (notée R_{S} ou R_{□}). La résistance carrée R_{S} est égale au rapport de la résistivité sur l'épaisseur e de la couche du matériau considéré R_{S} = ρ/e. La résistance carrée donne la valeur de la résistance d'un dépôt de surface carrée et d'épaisseur e et elle s'exprime en ohms mais elle se note Ω/□ (ohm par carré) pour éviter toute confusion avec la résistance réelle. La résistance électrique du dépôt considéré entre deux bords latéraux du dépôt est en effet égale à R_{S} pour une surface carrée mais sera différente pour un échantillon qui n'est pas carré.

Une conductivité faible correspond donc à une résistivité forte et à une résistance carrée également forte.

Dire que la conductivité du matériau de la couche conductrice 7 est inférieure à celle du matériau du motif 6 revient donc aussi à dire que la résistance carrée du matériau de la couche conductrice 7 est supérieure à la résistance carrée du matériau du motif 6.

La résistance carrée R_{S} de l'ITO est ainsi de l'ordre de 10 à 100 Ω/□ alors que la résistance carrée R_{S} du PEDOT-PSS est de l'ordre de 10 MΩ/□ (méga Ohms/carré).

Cette différence de conductivité permet d'assurer un gradient de champ électrique dans le volume 4 lors de la mise en place d'une tension alternative entre les électrodes. Le gradient dépend par ailleurs de la fréquence du signal électrique : plus la fréquence est élevée, moins le signal électrique pourra se propager dans la cellule.

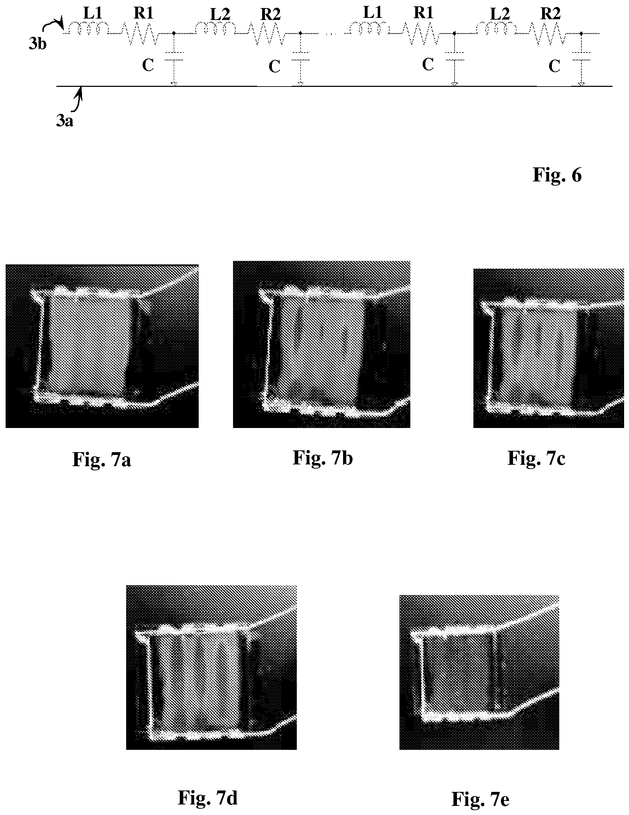

Il est bien connu que l'assemblage d'un cristal liquide cholestérique entre deux électrodes conductrices constitue une capacité. La figure 6 (tirée des publications bien connues de l'Homme du Métier) montre le schéma classique d'un tel assemblage. La capacité C est celle du condensateur formé par le cristal liquide 8. Les résistances R1 schématisent celles des zones couvertes par le motif 6 conducteur et les résistances R2 schématisent celles des zones couvertes par la seule couche conductrice 7. Les inductances L1 et L2 associées à R1 et R2 sont représentées ici mais elles sont la plupart du temps négligeables.

Une telle association de circuits LC a un comportement en termes de chute de tension qui est très dépendant de la fréquence de la tension.

La publication : « Liquid Crystal adaptative lenses with modal control » de A.F. Naumov, Yu Loktev, I.R. Guralnik et G. Vdovin (Optic letters / Vol 23/ n° 13 /01/07/1998 décrit une lentille à cristaux liquides à focale variable dans laquelle un cristal liquide est disposé entre deux électrodes, une des électrodes portant un contact annulaire délimitant une ouverture transparente portant une électrode fortement résistive. Cette publication montre que lorsque la tension a une fréquence donnée, le champ électrique dans le cristal liquide a une forme sensiblement parabolique entre les électrodes très conductrices. Les auteurs utilisent cette variation du champ en fonction de la fréquence pour donner des caractéristiques de distance focale différentes à la lentille ainsi réalisée.

Ce phénomène de variation du champ au sein d'un cristal liquide et en fonction de la fréquence est également décrit dans le brevet FR2957684, toujours dans le cadre d'une application à la réalisation d'une lentille à focale variable.

Ces phénomènes physiques bien connus et déjà modélisés sont utilisés par la présente invention avec un matériau cristal liquide cristal liquide bistable avec champ seuil (par exemple cholestérique).

Il en résulte, non pas une collimation, mais un niveau de gris variable lors de l'arrêt de la tension, niveau de gris qui est fonction de la fréquence de la tension qui a été appliquée. A titre de variante on pourrait réaliser le motif 6 en un oxyde métallique tel que l'oxyde de zinc dopé à l'aluminium (AZO) ou en un matériau métallique, par exemple un fin réseau de fils d'argent. Dans le cas d'un dépôt métallique le nombre et l'épaisseur des fils seront choisis de façon à ne pas gêner la transparence de la cellule 1.

La figure 2 montre en vue de face un mode de réalisation de l'électrode 3b. On voit que le motif 6 est formé ici par un ensemble de bandes conductrices parallèles qui sont toutes reliées par une barrette 6a réalisée dans le même matériau conducteur que le reste du motif 6.

Un tel motif 6 est aisé à réaliser par gravure du substrat 2b puis dépôt du matériau conducteur (ITO) sous vide.

On dépose ensuite la couche conductrice 7 qui couvre à la fois le motif 6 et la surface du substrat 2b qui ne porte pas le motif 6. Le dépôt de la couche 7 de PEDOT-PSS est réalisé par enduction centrifuge (plus connue sous le terme anglo saxon de « spin coating »). Ce mode de dépôt permet d'assurer la réalisation d'une couche conductrice d'épaisseur uniforme et de composition homogène. Une épaisseur uniforme et une composition homogène permettent de garantir une répartition uniforme de la conductivité de la couche 7.

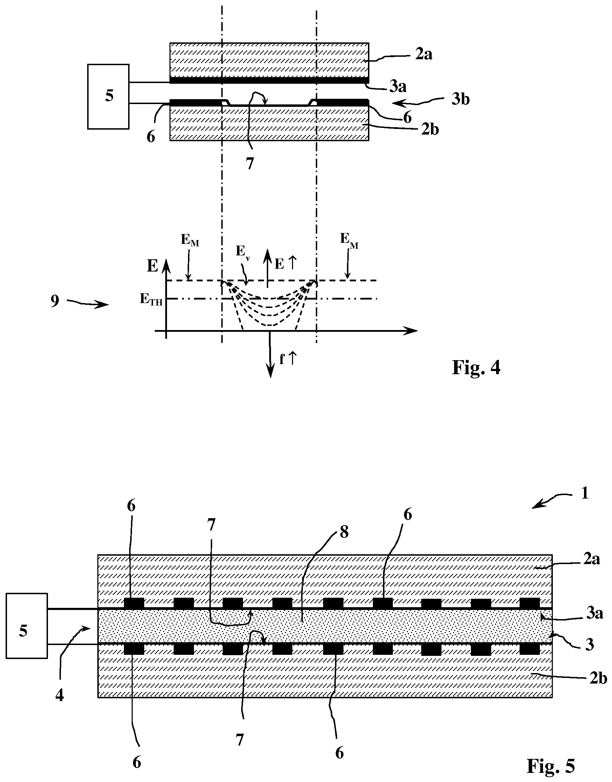

On notera que la gravure du motif 6 puis le dépôt en couche mince de la couche conductrice 7 conduisent à une cellule dans laquelle l'épaisseur de cristal liquide 8 est uniforme pour toute la cellule (épaisseur du cristal liquide de l'ordre de 4 micromètres). Il n'y a donc pas de variation spatiale de la capacité du condensateur formé par les électrodes et le cristal liquide au sein de la cellule comme c'était le cas dans le brevet US2011/019111. En particulier, la figure 4 est une représentation schématique de la cellule 1 dans laquelle les traits épais représentant le motif 6 et le trait fin de la couche conductrice 7 sont sans rapport avec les épaisseurs réelles. L'épaisseur du cristal liquide 8 est constante tant en regard du motif 6 qu'en regard de la couche conductrice 7 en dehors du motif 6 (de l'ordre de 4 micromètres) . C'est d'ailleurs aussi le cas sur les figures 1 et 5.

La figure 4 montre en coupe transversale une partie de la cellule 1. Le générateur électrique 5 relie l'électrode 3a et l'électrode 3b, c'est à dire à la fois le motif 6 (dont seules deux bandes sont représentées ici), et la couche conductrice 7.

Le générateur 5 applique entre les électrodes 3a et 3b une tension électrique alternative qui crée un champ électrique E également alternatif entre ces électrodes 3a et 3b. L'amplitude maximale de ce champ E est choisie avec un niveau légèrement supérieur au champ seuil E_{TH} du cristal liquide bistable 8.

La courbe 9 qui est positionnée en dessous du schéma de la cellule 1 permet de représenter (traits en pointillés) la répartition spatiale du champ électrique à l'intérieur du cristal liquide 8.

On remarque que, en regard des motifs 6, le champ électrique E_{M} est maximal en raison de la conductivité des matériaux formant le motif 6 et l'électrode 3a. Il y a passage du cristal à l'état homéotrope (transparent) dans ces zones en regard du motif 6.

On remarque aussi que le champ électrique Eᵥ est d'un niveau variable et inférieur ou égal au champ maximal E_{M} dans la zone du cristal 8 qui est située entre les bandes du motif 6. En effet dans ces zones les électrodes en regard sont d'une part l'électrode 3a très conductrice et d'autre part la couche conductrice 7 qui a une conductivité inférieure. La valeur du champ électrique Eᵥ dans cette zone est variable avec la fréquence de la tension qui est appliquée aux électrodes 3a,3b.

Pour une fréquence nulle (tension continue) le champ Eᵥ est égal au champ maximal E_{M}. Pour une fréquence plus élevée, le champ Eᵥ décroit et ce champ est d'autant plus faible que la fréquence est élevée. La flèche f↑ sur la figure 4 schématise le déplacement progressif des couches de champ (figurées en pointillé) avec l'augmentation de la fréquence f.

On voit que, pour certaines fréquences, le champ Eᵥ devient inférieur au champ seuil E_{TH}, ce qui signifie que le cristal liquide cholestérique 8 passe à son état conique focale qui est stable. Donc à la coupure du courant la cellule comportera une part du cristal liquide 8 qui sera à l'état planaire (le cristal qui était en regard du motif 6) et une part du cristal liquide qui sera à l'état conique focale (transparent), part qui est localisée longitudinalement entre les bandes du motif 6.

La réflectivité de la cellule sera donc inférieure à 100% pour la fréquence lumineuse qui lui est associée.

Le taux de réflectivité (niveau de gris) de la cellule peut donc être ajusté en modifiant la fréquence de la tension fournie par le générateur 5.

On voit que grâce à l'invention on n'est pas tributaire de la maîtrise du comportement de l'ensemble de la couche du cristal liquide 8 dans un domaine pour lequel le champ est inférieur au champ seuil.

On maîtrise au contraire pleinement une part du volume de cristal liquide qui sera systématiquement réfléchissante puisque soumise à un champ supérieur au champ seuil (la part qui se trouve en dessous du motif 6).

La part de cristal liquide dont la réflectivité est ajustée est celle située entre les zones du motif 6. Un étalonnage préalable de la cellule permet de maîtriser son comportement en fonction de la variation de la fréquence.

Par ailleurs par comparaison avec les procédés connus de multiplexage temporel, on n'est plus ici tributaire de la dynamique de commutation du cristal liquide 8 pour doser le niveau de gris de la cellule. Le comportement dynamique du cristal n'est plus un verrou technique pour assurer une modulation du niveau de gris de la cellule. Par ailleurs le niveau de gris est maintenu après coupure de l'alimentation électrique.

On voit que la cellule aura en fonction de la fréquence choisie une réflectivité maximale (fréquence nulle) ou une réflectivité minimale qui dépendra du rapport entre la surface couverte par le motif et la surface non couverte par le motif (fréquence maximale).

Le niveau de la réflectivité minimale dépendra donc du rapport de la surface du motif 6 sur la surface du substrat 3b sur lequel il est appliqué.

L'invention permet par ailleurs d'obtenir un niveau de gris qui est variable de façon continue en jouant sur le niveau de la fréquence. On n'est donc plus tributaire de la multiplication des motifs comme c'était le cas avec le brevet US2011/019111.

Il reste cependant toujours possible d'obtenir une réflectivité nulle en appliquant aux électrodes une tension telle que le champ électrique soit inférieur au champ seuil E_{TH}. Dans ce cas le cristal liquide adopte un état conique focale même en regard du motif 6.

Les latitudes de réglages sont donc particulièrement larges.

On définira le motif en fonction des caractéristiques de contraste souhaitées de façon courante pour la cellule, mais aussi en fonction de la taille du motif que l'on veut afficher et de la distance d'observation. La fréquence maximale d'utilisation influera également sur les caractéristiques dimensionnelles des motifs.

Si on veut maximiser la modulation de réflectivité, il faudra réduire le plus possible la largeur des pistes conductrices.

Un rapport de surface de l'ordre de 50% entre la surface couverte par le motif et la surface du substrat donne une capacité de réflectivité comprise entre 50% et 100% (avec cependant toujours la possibilité d'une réflectivité nulle).

On pourra ainsi choisir une surface couverte par le motif comprise entre 10% et 60% de la surface du substrat considéré.

A titre d'exemple on a réalisé une cellule selon l'invention dans laquelle le motif est du type de celui représenté à la figure 2 et formé de bandes conductrices d'ITO et recouvert d'une couche conductrice 7 uniforme et homogène de PEDOT-PSS couvrant toute la surface du substrat 2b. La couche 7 est déposée par enduction centrifuge sur le substrat portant le motif 6 gravé. L'épaisseur de la couche de cristal liquide 8 est constante et de 4 micromètres.

Les caractéristiques électriques de la cellule sont les suivantes :
Résistance carrée du motif 6 : R_{S6} = 20 Ω/□
Résistance carrée de la couche 7 : R_{S7} = 1,5 Méga Ω/□
Capacité du cristal liquide 8 : C = 10⁻⁵ F/ m⁻².

Le champ seuil est obtenu sur une telle cellule en appliquant entre les électrodes 3a et 3b une tension alternative dont l'amplitude maximale est légèrement inférieure à 30 Volts.

Pour l'expérience on a appliqué à cette cellule une tension alternative de 30 volts (donc créant un champ dont l'amplitude maximale est supérieure au champ seuil) et à différents niveaux de fréquence et on a arrêté le signal pour observer l'état de réflectivité de la cellule obtenu.

On considère dans chaque cas le niveau de gris ou la réflectivité obtenue en % de niveau de gris ou % de réflectivité. Une réflectivité ou niveau de gris de 100% correspond à un cristal qui est passé intégralement à l'état planaire. Une réflectivité ou niveau de gris de 0% correspond à un cristal qui est resté intégralement à l'état conique focale (transparent).

Les figures 7a, 7b, 7c et 7d sont des photos montrant les états de réflectivité obtenus (tension alternative de 30 volts) :
- Figure 7a après application d'un signal de fréquence 5 kHz, niveau de gris 100% (réflectivité maximale) ;
- Figure 7b après application d'un signal de fréquence 10 kHz, niveau de gris 90% ;
- Figure 7c après application d'un signal de fréquence 15 kHz, niveau de gris 80% ;
- Figure 7d après application d'un signal de fréquence 20 kHz, niveau de gris 50% (réflectivité diminuée de moitié).

La figure 7e est une photo montrant l'état de réflectivité obtenu après application d'une tension alternative de 25 volts (donc créant un champ dont l'amplitude maximale est inférieure au champ seuil).

Le champ obtenu est alors inférieur au champ seuil pour toute la cellule et le niveau de gris est de 0%, (réflectivité nulle). Le cristal reste à l'état conique focale, donc transparent.

La photo 7e a été obtenue avec une fréquence du signal de 30 kHz, mais le même état aurait été obtenu pour toute autre fréquence, puisque le champ généré pour la tension de 25 volts est toujours inférieur au champ seuil du cristal.

A titre de variante, il est possible de moduler la réflectivité de la cellule réfléchissante en appliquant entre les électrodes de la cellule une tension électrique alternative de fréquence fixe. Dans ce cas on fait varier non plus la fréquence mais l'amplitude de la tension (donc l'amplitude du champ électrique E).

Bien sûr ce champ électrique doit être toujours avec un niveau légèrement supérieur au champ seuil du cristal liquide bistable.

La répartition du champ électrique est là encore modifiée par la présence des zones de forte résistivité entre les branches du motif 6.

On choisira une fréquence de fonctionnement suffisamment élevée pour que le champ entre les branches du motif 6 soit minimal pour une amplitude de champ initiale donnée qui est supérieure au champ seuil E_{TH}.

L'augmentation de l'amplitude du champ provoquera alors l'augmentation du champ entre les branches du motif 6. La flèche ET sur la figure 4 schématise le déplacement progressif des couches de champ (figurées en pointillé) avec l'augmentation de l'amplitude du champ E.

Il est bien sûr possible de donner au motif 6 des formes différentes.

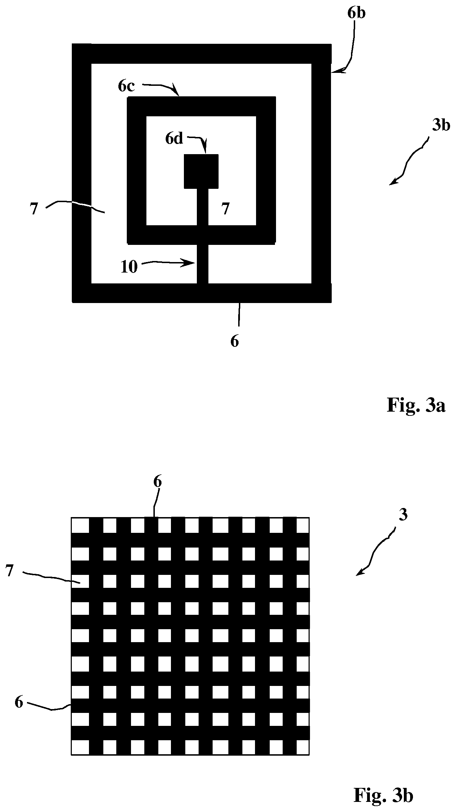

La figure 3a montre ainsi un motif 6 qui est formé par trois quadrilatères ayant mêmes axes de symétrie : un carré périphérique 6b formé de quatre barrettes conductrices gravées sur le substrat, un carré médian 6c formé lui aussi de quatre barrettes conductrices et un carré central 6d sous la forme d'un simple plot gravé. La couche conductrice 7 couvre tout le substrat ainsi que les différents quadrilatères 6b, 6c et 6d. Les quadrilatères seront bien entendu tous reliés les uns aux autres à la source de tension pour être tous au même potentiel électrique. La liaison pourra être réalisée par une piste conductrice 10 en même matériau conducteur que les quadrilatères 6a, 6c et 6d.

La figure 3b montre un motif qui a la forme d'une grille 6 comportant des barrettes orthogonales les unes aux autres. La grille 6 pourrait être plus simplement alors formée par un réseau de lignes conductrices obtenues par gravure d'une fine couche métallique sur le substrat.

La figure 5 montre un autre mode de réalisation de l'invention qui diffère de celui de la figure 1 en ce que chaque substrat 2a, 2b porte une électrode 3a ou 3b qui est formée par l'association d'un motif 6 ne couvrant pas totalement la surface du substrat considéré et d'une couche conductrice 7 couvrant la surface du substrat considéré.

La conductivité du matériau de chaque couche 7 étant inférieure à celle du matériau du motif 6 associé.

L'avantage de cette configuration est que l'effet obtenu est plus marqué : il y a une plus forte variation du champ électrique avec la fréquence.

Ce mode de réalisation imposera cependant un assemblage plus précis des deux plaques afin de positionner correctement les électrodes en regard l'une de l'autre.

## Revendications

1. Cellule réfléchissante (1) comprenant au moins deux substrats (2a,2b) recouverts chacun d'une électrode (3a,3b) et disposés en regard l'un de l'autre, les substrats délimitant entre eux un volume (4) qui les sépare et qui est rempli par un matériau (8) de type cristal liquide bistable avec champ seuil, par exemple un cristal liquide cholestérique, les deux électrodes étant destinées à être reliées à une source de tension (5), cellule **caractérisée en ce qu'**au moins une des électrodes (3b) est formée par l'association d'un motif (6) ne couvrant pas totalement la surface du substrat (2b) considéré et d'une couche conductrice (7) couvrant la surface du substrat considéré, la conductivité du matériau de la couche (7) étant inférieure à celle du matériau du motif (6).

2. Cellule réfléchissante selon la revendication 1, **caractérisée en ce que** le motif (6) a une surface comprise entre 10% et 60% de la surface du substrat (2b) considéré.

3. Cellule réfléchissante selon une des revendications 1 ou 2, **caractérisée en ce que** la couche conductrice (7) est formée d'un dépôt de PEDOT-PSS.

4. Cellule réfléchissante selon la revendication 3, **caractérisée en ce que** le motif conducteur (6) est formé par un dépôt d'ITO ou de métal.

5. Cellule réfléchissante selon une des revendications 1 à 4, **caractérisée en ce que** le motif (6) est formé par un ensemble de bandes conductrices parallèles.

6. Cellule réfléchissante selon une des revendications 1 à 4, **caractérisée en ce que** le motif (6) est formé par au moins un quadrilatère.

7. Cellule réfléchissante selon une des revendications 1 à 4, **caractérisée en ce que** le motif (6) est formé par une grille.

8. Cellule réfléchissante selon une des revendications 1 à 7, **caractérisée en ce que** chaque électrode (3a,3b) est formée par l'association d'un motif (6) ne couvrant pas totalement la surface du substrat considéré et d'une couche conductrice (7) couvrant la surface du substrat considéré.

9. Procédé de modulation de la réflectivité d'une cellule réfléchissante (1) selon une des revendications précédentes, procédé **caractérisé en ce qu'**on applique entre les électrodes (3a,3b) de la cellule (1) une tension électrique alternative créant un champ électrique (E) également alternatif entre les électrodes (3a,3b), l'amplitude maximale de ce champ électrique étant fixée et ayant un niveau légèrement supérieur au champ seuil (ETH) du cristal liquide bistable (8), procédé dans lequel on module la réflectivité en variant la fréquence dudit champ électrique de façon à diminuer la valeur (EV) du champ électrique en dessous du champ seuil (ETH) au niveau des zones du cristal liquide non couvertes par le motif (6).

10. Procédé de modulation de la réflectivité d'une cellule réfléchissante (1) selon une des revendications 1 à 8, procédé **caractérisé en ce qu'**on applique entre les électrodes (3a,3b) de la cellule (1) une tension électrique alternative créant un champ électrique (E) également alternatif entre les électrodes (3a,3b), la fréquence de la tension étant fixée à une valeur permettant de diminuer la valeur du champ électrique en dessous du champ seuil (ETH) au niveau des zones du cristal liquide non couvertes par le motif (6) lorsque l'amplitude maximale du champ électrique a un niveau initial légèrement supérieur au champ seuil (ETH) du cristal liquide bistable (8), procédé dans lequel on module la réflectivité en variant l' amplitude maximale du champ électrique qui est supérieure au niveau initial de façon à augmenter également le champ électrique au niveau des zones du cristal liquide non couvertes par le motif (6) et rapprocher ainsi dans lesdites zones ce champ électrique de la valeur du champ seuil (ETH).

## Patentansprüche

1. Reflektierende Zelle (1), umfassend mindestens zwei Substrate (2a, 2b), die jeweils mit einer Elektrode (3a, 3b) bedeckt und gegenüber angeordnet sind, wobei die Substrate zwischen sich ein Volumen (4) begrenzen, das sie trennt und das mit einem Material (8) vom Typ bistabiles Flüssigkristall mit Grenzfeld, beispielsweise einem cholesterischen Flüssigkristall, gefüllt ist, wobei die zwei Elektroden bestimmt sind, mit einer Spannungsquelle (5) verbunden zu sein, wobei die Zelle **dadurch gekennzeichnet ist, dass** mindestens eine der Elektroden (3b) durch die Kombination eines Motivs (6), das die Oberfläche des entsprechenden Substrats (2b) nicht vollständig bedeckt, und einer leitenden Schicht (7), welche die Oberfläche des entsprechenden Substrats bedeckt, gebildet ist, wobei die Leitfähigkeit des Materials der Schicht (7) geringer ist als die des Materials des Motivs (6).

2. Reflektierende Zelle nach Anspruch 1, **dadurch gekennzeichnet, dass** das Motiv (6) eine Oberfläche hat, die zwischen 10 % und 60 % der Oberfläche des entsprechenden Substrats (2b) liegt.

3. Reflektierende Zelle nach einem der Ansprüche 1 oder 2, **dadurch gekennzeichnet, dass** die leitende Schicht (7) von einer PEDOT-PSS-Ablagerung gebildet ist.

4. Reflektierende Zelle nach Anspruch 3, **dadurch gekennzeichnet, dass** das leitende Motiv (6) von einer ITO- oder Metallablagerung gebildet ist.

5. Reflektierende Zelle nach einem der Ansprüche 1 bis 4, **dadurch gekennzeichnet, dass** das Motiv (6) von einer Einheit paralleler leitender Streifen gebildet ist.

6. Reflektierende Zelle nach einem der Ansprüche 1 bis 4, **dadurch gekennzeichnet, dass** das Motiv (6) von mindestens einem Viereck gebildet ist.

7. Reflektierende Zelle nach einem der Ansprüche 1 bis 4, **dadurch gekennzeichnet, dass** das Motiv (6) von einem Gitter gebildet ist.

8. Reflektierende Zelle nach einem der Ansprüche 1 bis 7, **dadurch gekennzeichnet, dass** jede Elektrode (3a, 3b) durch die Kombination eines Motivs (6), das die Oberfläche des entsprechenden Substrats nicht vollständig bedeckt, und einer leitenden Schicht (7), welche die Oberfläche des entsprechenden Substrats bedeckt, gebildet ist.

9. Verfahren zur Modulierung der Reflektivität einer reflektierenden Zelle (1) nach einem der vorangehenden Ansprüche, wobei das Verfahren **dadurch gekennzeichnet ist, dass** zwischen den Elektroden (3a, 3b) der Zelle (1) eine elektrische Wechselspannung angelegt wird, die ein ebenfalls wechselndes elektrisches Feld (E) zwischen den Elektroden (3a, 3b) erzeugt, wobei die maximale Amplitude dieses elektrischen Felds festgelegt ist und ein Niveau etwas über dem Grenzfeld (ETH) des bistabilen Flüssigkristalls (8) hat, wobei bei dem Verfahren die Reflektivität durch Ändern der Frequenz des elektrischen Felds derart moduliert wird, dass der Wert (EV) des elektrischen Feldes unter das Grenzfeld (ETH) im Bereich der Zonen des Flüssigkristalls sinkt, die nicht von dem Motiv (6) bedeckt sind.

10. Verfahren zur Modulierung der Reflektivität einer reflektierenden Zelle (1) nach einem der Ansprüche 1 bis 8, wobei das Verfahren **dadurch gekennzeichnet ist, dass** zwischen den Elektroden (3a, 3b) der Zelle (1) eine elektrische Wechselspannung angelegt wird, die ein ebenfalls wechselndes elektrisches Feld (E) zwischen den Elektroden (3a, 3b) erzeugt, wobei die Frequenz der Spannung auf einen Wert festgelegt ist, der erlaubt, den Wert des elektrischen Feldes unter das Grenzfeld (ETH) im Bereich der Zonen des Flüssigkristalls zu senken, die nicht von dem Motiv (6) bedeckt sind, wenn die maximale Amplitude des elektrischen Felds ein Ausgangsniveau etwas über dem Grenzfeld (ETH) des bistabilen Flüssigkristalls (8) hat, wobei bei dem Verfahren die Reflektivität durch Ändern der maximalen Amplitude des elektrischen Felds, die über dem Ausgangsniveau liegt, derart moduliert wird, dass ebenfalls das elektrische Feld im Bereich der Zonen des Flüssigkristalls erhöht wird, die nicht von dem Motiv (6) bedeckt sind und somit in den Zonen dieses elektrische Feld an den Wert des Grenzfelds (ETH) angenähert wird.

## Claims

1. A reflecting cell (1) comprising at least two substrates (2a,2b), each covered by an electrode (3a,3b) and facing each other, the substrates delimitating between them a volume (4) which separates them and which is filled with a bistable liquid crystal-type material (8) with a threshold field, for example a cholesteric liquid crystal, both electrodes being intended to be connected to a voltage source (5), the cell being **characterized in that** at least one of the electrodes (3b) is formed by associating a pattern (6), which does not entirely cover the surface of the substrate (2b) considered, and a conducting layer (7) covering the surface of the substrate considered, the conductivity of the material of the layer (7) being lower than that of the material of the pattern (6).

2. The reflecting cell according to claim 1, **characterized in that** the pattern (6) has a surface between 10% and 60% of the surface of the substrate (2b) considered.

3. The reflecting cell according to one of claims 1 or 2, **characterized in that** the conducting layer (7) is formed by a deposit of PEDOT-PSS.

4. The reflecting cell according to claim 3, **characterized in that** the conducting pattern (6) is formed by a deposit of ITO or of metal.

5. The reflecting cell according to one of claims 1 to 4, **characterized in that** the pattern (6) is formed by a set of parallel conducting strips.

6. The reflecting cell according to one of claims 1 to 4, **characterized in that** the pattern (6) is formed by at least one quadrilateral.

7. The reflecting cell according to one of claims 1 to 4, **characterized in that** the pattern (6) is formed by a grating.

8. The reflecting cell according to one of claims 1 to 7, **characterized in that** each electrode (3a,3b) is formed by associating a pattern (6), which does not entirely cover the surface of the substrate considered, and a conducting layer (7) covering the surface of the substrate considered.

9. A method for modulating the reflectivity of a reflecting cell (1) according to one of the preceding claims, the method being **characterized in that** an alternating electrical voltage is applied between the electrodes (3a,3b) of the cell (1), creating an alternating electrical field (E) between the electrodes (3a,3b), the maximum amplitude of this electrical field being fixed and having a level slightly higher than the threshold field (ETH) of the bistable liquid crystal (8), method in which the reflectivity is modulated by varying the frequency of said electrical field so as to decrease the value (EV) of the electrical field below the threshold field (ETH) at the areas of the liquid crystal which are not covered by the pattern (6).

10. The method for modulating the reflectivity of a reflecting cell (1) according to one of claims 1 to 8, the method being **characterized in that** an alternating electrical voltage is applied between the electrodes (3a,3b) of the cell (1), creating an alternating electrical field (E) between the electrodes (3a,3b), the frequency of the voltage being fixed at a value allowing to decrease the value of the electrical field below the threshold field (ETH) at the areas of the liquid crystal which are not covered by the pattern (6) when the maximum amplitude of the electrical field has an initial level slightly higher than the threshold field (ETH) of the bistable liquid crystal (8), method in which the reflectivity is modulated by varying the maximum amplitude of the electrical field which is higher than the initial level so as to also increase the electrical field at the areas of the liquid crystal which are not covered by the pattern (6) and thus bring this electrical field, within said areas, closer to the value of the threshold field (ETH).
